# EUROPEAN PATENT APPLICATION

(11) **EP 4 783 538 A1**
(43) Date of publication of application: **29.07.2026**
(21) Application number: 26152161.1
(22) Date of filing: 15.01.2026
(51) Int. Cl.: H04L 45/02, H04L 45/00, H04L 45/74, H04L 45/745

(54) **REACHABILITY VIA CONNECTED ROUTES IN A DISTRIBUTED ETHERNET FABRIC**

(30) Priority: 28.01.2025 US 202563750472 P; 26.02.2025 US 202519063751
(71) Applicant: Arista Networks, Inc., Santa Clara, CA 95054 (US)
(72) Inventor: BIRMIWAL, Sharad, 95054 Santa Clara, California (US); YOUSUF, Muhammad Khalid, 95054 Santa Clara, California (US); YUAN, Song, 95054 Santa Clara, California (US); LORIOL, Matthieu, 95054 Santa Clara, California (US)
(74) Representative: Hoffmann Eitle

(57) **Abstract**

In an Ethernet fabric, a line card-type network device (LC device) receives a packet from a host connected to it, and sends the packet to a destination host connected to an egress LC device that has not learned the MAC (Media Access Control) address of the destination host. Because the egress LC device has not learned the MAC address, the packet is received on its CPU port. This triggers ARP learning (Address Resolution Protocol) in the egress LC device to learn the MAC address of the destination host. The egress LC device advertises the host route of the destination host to all LC devices in the Ethernet fabric, so that packets for the destination host subsequently received from other LC devices in the Ethernet fabric are sent to the egress pipeline of the interface on the egress LC device to which the destination host is connected.

## Description

### BACKGROUND

The present disclosure is based on Ethernet fabrics. An Ethernet fabric is an architecture in which hosts are interconnected through a series of network devices that run Ethernet (Ethernet switches). A common topology for an Ethernet fabric is a spine-leaf topology, although any suitable topology can be used. A spine-leaf topology comprises a cluster of devices referred to as leaf devices (nodes) and spine devices (nodes). The cluster of leaf devices are connected to each other via spine devices. To provide communication between hosts attached to different leaf devices, routes are installed on the leaf devices and point to hosts connected to other leaf devices.

### BRIEF DESCRIPTION OF THE DRAWINGS

With respect to the discussion to follow and in particular to the drawings, it is stressed that the particulars shown represent examples for purposes of illustrative discussion, and are presented in the cause of providing a description of principles and conceptual aspects of the present disclosure. In this regard, no attempt is made to show implementation details beyond what is needed for a fundamental understanding of the present disclosure. The discussion to follow, in conjunction with the drawings, makes apparent to those of skill in the art how embodiments in accordance with the present disclosure may be practiced. Similar or same reference numbers may be used to identify or otherwise refer to similar or same elements in the various drawings and supporting descriptions. In the accompanying drawings:
FIG. 1 shows an example deployment of an Ethernet fabric in a system in accordance with the present disclosure.
FIG. 2 shows some details of an example line card-type (LC) network device in accordance with the present disclosure.
FIG. 3 shows an example of packet flow between hosts connected to the same LC device.
FIG. 4 shows example operations for configuring an interface in accordance with the present disclosure.
FIG. 5 illustrates an example sequence for configuring an interface in accordance with the present disclosure.
FIG. 6 shows example operations for initiating ARP (Address Resolution Protocol) learning in accordance with the present disclosure.
FIGs. 7A and 7B illustrate an example for initiating ARP (Address Resolution Protocol) learning in accordance with the present disclosure.
FIG. 8 shows an example network device.

### DETAILED DESCRIPTION

An Ethernet fabric in accordance with the present disclosure can be modeled after a modular switch. The Ethernet fabric comprises a fabric (corresponding to the CPU / switching fabric, collectively the backplane, of a modular switch) that interconnects a collection of line card-type (LC) network devices (corresponding to the line cards in a modular switch). Each physical port of an LC network device represents the physical port of a line card.

In accordance with the present disclosure, when an interface (e.g., et42) is configured on a physical port on an LC network device (e.g., LC2), a prefix (e.g., 20.0.0.1/24) is associated with the interface. The prefix represents the network connected to or otherwise associated with the interface, referred to as a "connected route." The LC network device will advertise the prefix of the connected route to the other LCs in the Ethernet fabric. The advertised connected route will include:
- the prefix 20.0.0.0/24 (network connected to et42)
- identifier of LC2
- identifier of the port associated with the CPU of LC2
Each LC device (e.g., LC1) that receives the advertised route will create a rule that matches on prefix 20.0.0.0/24. The rule will include an action to transmit packets with DIP (destination Internet Protocol) addresses that match the 20.0.0.0/24 prefix to the CPU port of LC2.

Suppose a host (H1) connected to LC1 sends a packet to a host (H2, with IP address 20.0.0.5) that is connected to port et42 on LC2; i.e., the packet contains DIP address 20.0.0.5. The ingress pipeline in LC1 will match on the 20.0.0.0/24 prefix (i.e., the longest prefix that matches 20.0.0.5) and will transmit the packet to the CPU port on LC2.

The CPU of LC2, in response, will initiate an ARP (Address Resolution Protocol) action to learn the MAC (Media Access Control) address associated with IP address 20.0.0.5. LC2 will advertise the prefix 20.0.0.5/32 (referred to as a "host route") to the other LC devices (including LC1) in the Ethernet fabric. The advertised host route will include:
- the host route; i.e., prefix 20.0.0.5/32
- identifier of LC2
- identifier of port et42 on LC2
- MAC rewrite index used by the LC devices when sending a packet to LC2 for egress; the rewrite index informs LC2 how to rewrite the MAC address before LC2 transmits packet out of port et42

LC2 will program the MAC rewrite information in an entry in its forwarding tables, indexed by the MAC rewrite index. For example, LC2 can program its forwarding table before advertising 20.0.0.5/32 to other LC devices in order to avoid dropping packets or performing software-forwarding.

Each LC device (including LC1) will create a rule that matches on prefix 20.0.0.5/32 with an action to transmit packets with DIPs that match the 20.0.0.5/32 prefix to the pipeline associated with port et42 on LC2.

When a host on LC1 sends a packet to host H2 on LC2 with DIP address 20.0.0.5, the ingress pipeline in LC1 will match on the 20.0.0.5/32 as the longest prefix (rather than 20.0.0.0/24) and will transmit the packet to the egress pipeline for et42 on LC2. The egress pipeline for et42 will then process the packet.

In the following description, for purposes of explanation, numerous examples and specific details are set forth in order to provide a thorough understanding of embodiments of the present disclosure. Particular embodiments as expressed in the claims may include some or all of the features in these examples, alone or in combination with other features described below, and may further include modifications and equivalents of the features and concepts described herein.

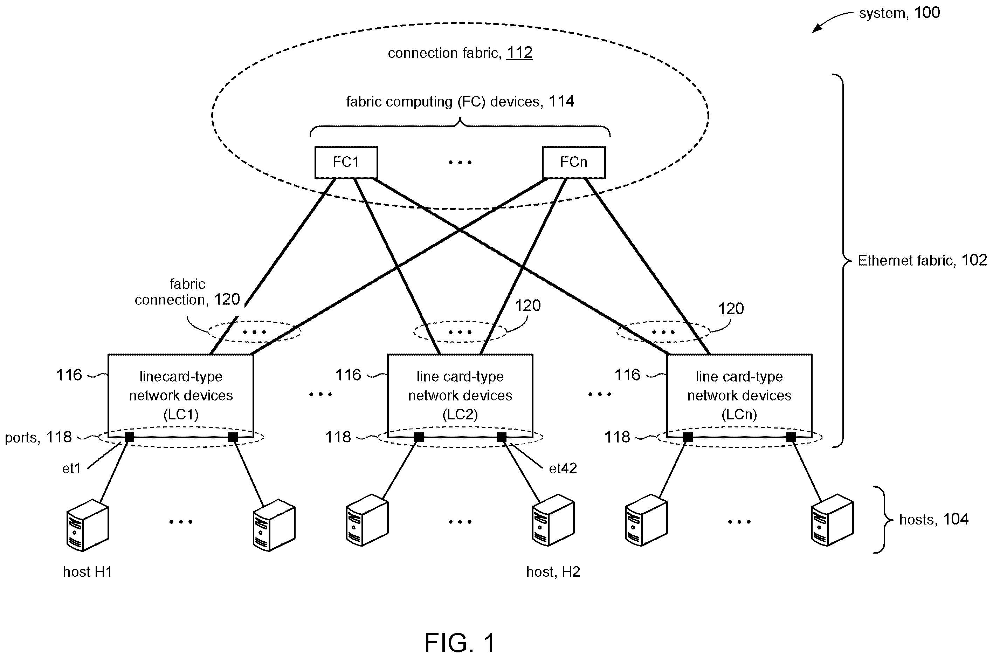

FIG. 1 shows a system 100 comprising Ethernet fabric 102 and hosts 104 connected to the Ethernet fabric. Ethernet fabric 102 includes connection fabric 112 comprising a plurality of fabric computing devices (FC devices) 114. Ethernet fabric 102 further includes a plurality of line card-type network devices (LC devices) 116. In some embodiments, LC device 116 can be switches comprising physical ports (e.g., Ethernet ports) 118 to which hosts 104 connect. For example, the figure shows host H1 is connected to a physical port on LC1 configured with an interface identified as et1, host H2 is connected to a physical port on LC2 configured as interface et42, and so on.

Each LC device 116 is connected to and configured for bi-directional communication with each FC device 114 via a corresponding fabric connection 120. The fabric 112 functions to interconnect the LC devices 116 for the exchange of data between LC devices such as:
- packets sent from a host connected to one LC device (e.g., H1) to a host connected to another LC device (e.g., H2)
- routing information, such as connected routes and host routes, between LC devices

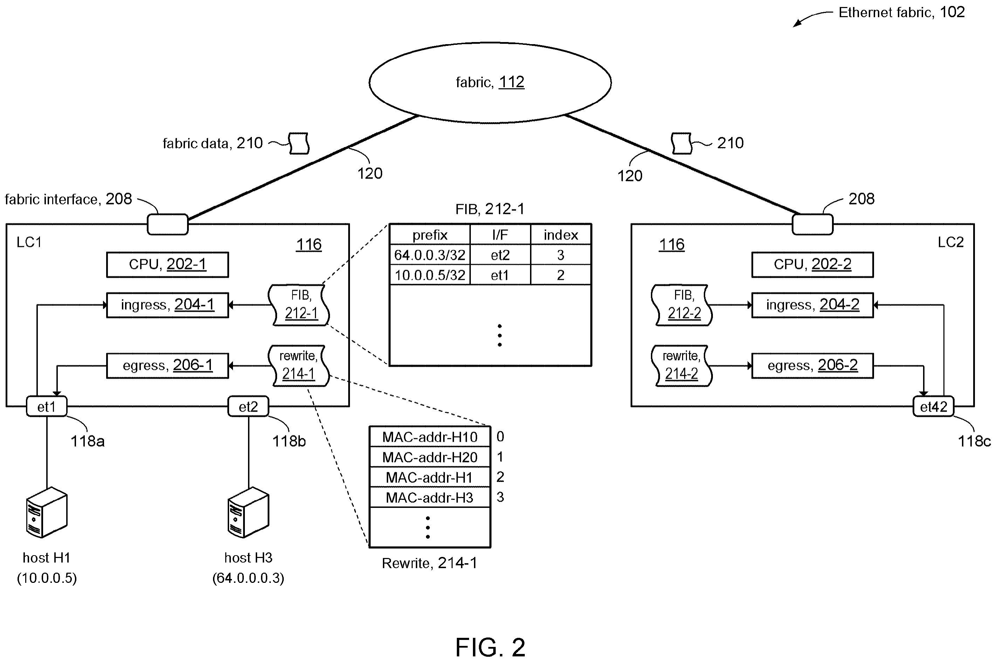

Referring to the example in FIG. 2, fabric 112 provides communication between LC devices LC1 and LC2, with the understanding from FIG. 1 that fabric 112 provides communication between all LC devices 116. Each LC device (e.g., LC1, LC2) includes a fabric interface 208 that connects the LC device to fabric 112 via fabric connection 120. Data exchanged between LC devices 116 and fabric 112 are referred to as fabric data 210 to distinguish data packets exchanged between ports 118 and hosts connected to interfaces defined on the ports.

The example in FIG. 2 shows some details in an LC device. Each LC device includes a CPU 202 which represents the control plane functionality of an LC device; e.g., LC1 comprises CPU 202-1, LC2 comprises CPU 202-2.

Each interface that is configured on a physical port 118 on an LC device is associated with a corresponding ingress pipeline 204 and a corresponding egress pipeline 206. FIG. 2, for example, shows interface et1 on physical port 118a of LC1 is associated with ingress pipeline 204-1 and LC2 shows interface et42 on physical port 118c is associated with ingress pipeline 204-2. FIG. 2 also shows interfaces et1 and et42 are associated with respective egress pipelines 206-1 and 206-2.

Each LC device is associated with a corresponding FIB (forwarding information base). FIG. 2, for example, shows that LC1 and LC2 are associated with respective FIBs 212-1, 212-2 (collectively 212). FIG. 2 shows details for FIB 212-1 associated with LC1. Each FIB entry 212a comprises data fields including a prefix, an identifier of an interface, and a rewrite index into a rewrite table (explained below). The operation of a FIB is understood. Briefly, a FIB is used to look up an egress port using the DIP address in an ingress packet.

Each LC device is associated with a corresponding rewrite table. FIG. 2, for example, shows that LC1 and LC2 are associated with respective rewrite tables 214-1, 214-2 (collectively 214). FIG. 2 shows details for rewrite table 214-1 in LC1. Each entry in rewrite table 214-1 contains a MAC address of a host directly connected to one port on LC1; e.g., hosts H1 and H3 are directly connected to interfaces et1 and et2 respectively, with respective MAC addresses MAC-addr-H1 and MAC-addr-H3.

The example in FIG. 2 shows that ARP (address resolution protocol) learning has occurred on hosts H1 and H3. ARP learning of host H1, for example, results in a rewrite entry to be added to rewrite table 214-1, namely:
MAC-ADDR-H1 in an entry indexed at 2,
and a FIB entry to be added to FIB 212-1, namely:
   prefix = 10.0.0.5/32, I/F = et1, rewrite index = 2.
Likewise for host H3.

Aspects of FIB 212 and rewrite table 214 are discussed in more detail below. Briefly, the ingress pipeline will find an entry in FIB 212 having the longest prefix that matches the DIP address of the packet being processed. The packet will be paired with the rewrite index in the matched FIB entry and enqueued on the egress pipeline associated with the interface identified in the I/F data field in the matched FIB entry; the egress pipeline may be on the same LC device or on a different LC device. The egress pipeline will process an enqueued packet to be transmitted on the interface associated with the pipeline, including replacing the destination MAC address in the packet with the MAC address in an entry in the rewrite table 214 indexed by the paired rewrite index. The egress pipeline may perform additional processing such as strip the old Ethernet header from the packet and prepend it with a newly constructed Ethernet header, decrement TTL of the inner IP header, and so on.

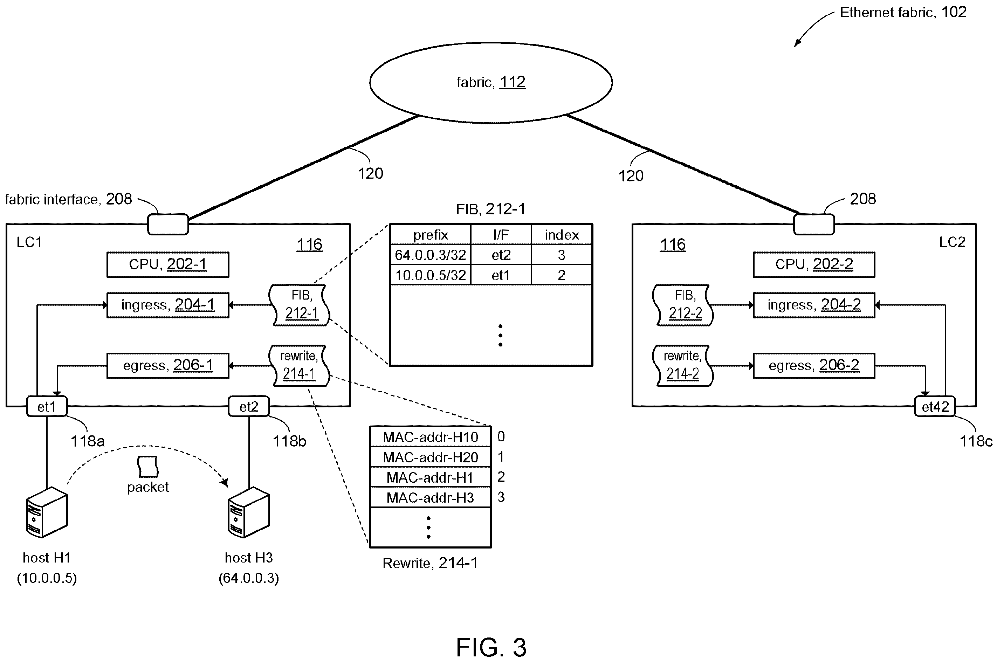

Referring to the example in FIG. 3, the figure shows a packet flow between hosts (e.g., host H1 to host H3) that are connected to the same LC device, namely LC1. Suppose for discussion purposes FIB 212-1 and rewrite table 214-1 are configured as shown. Packet processing generally proceeds as follows:
- Packets received from a host connected to an interface are enqueued on the ingress pipeline associated with that interface. For example, packets received on interface et1 of LC1 from host H1 will be enqueued on, and initially processed, by ingress pipeline 204-1.
- In the example, the destination of the received packet is host H3 on interface et2 of LC1 (DIP address is 64.0.0.3):
   ∘ In ingress pipeline 204-1, the DIP will match on the entry in FIB 212-1 that contains prefix 64.0.0.3/32. The matched FIB entry specifies interface et2 and rewrite index '3'. The prefix 64.0.0.3/32 is an example of a "host route" because the prefix specifies a single IP address on the network connected to interface et2.
   ∘ Ingress pipeline 204-1 will pair the packet with rewrite index '3', and enqueue the pair on the egress pipeline in LC1 (not shown) associated with interface et2.
- The egress pipeline associated with interface et2 can transmit the enqueued packet:
   ∘ The egress pipeline can rewrite a portion of the enqueued packet using the paired rewrite index, namely rewrite index '3'. The rewrite index specifies an entry in rewrite table 214-1. The rewrite entry contains a MAC address of the destination host (in our example host H3) connected to interface et2, namely MAC-ADDR-H3.
   ∘ The egress pipeline will generate an egress packet in accordance with known forwarding operations, including rewriting a portion of the Ethernet header of the enqueued packet to replace the destination MAC address in the header with the MAC address of host H3.
   ∘ The egress pipeline can then transmit the egress packet on interface et2 to host H3.

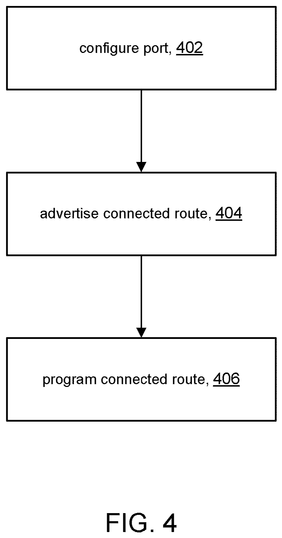

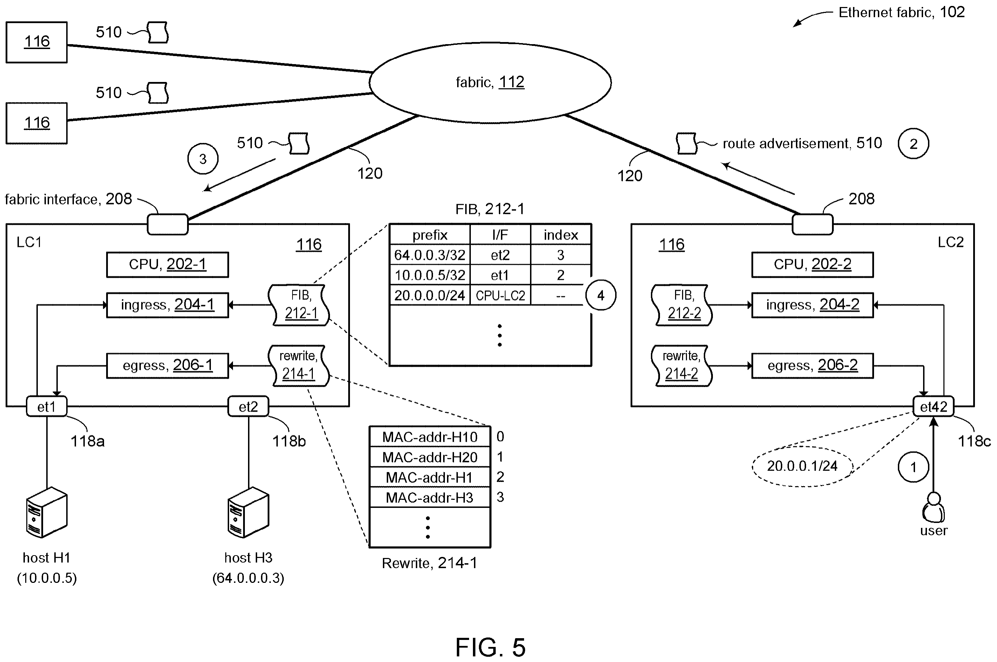

Referring to FIGs. 4 and 5, the discussion will now turn to a description of operations for configuring an interface on a physical port on an LC device (e.g., 116) in an Ethernet fabric (e.g., 102). FIG. 4 shows an example flow of operations in accordance with some embodiments, and FIG. 5 is an illustrative example of configuring an interface, identified as et42, on physical port 118c on LC2. In some embodiments, interface identifiers can be globally unique across all LC devices so that an interface identifier identifies a specific LC device in fabric 102 and a specific port on that LC device. The circled numerals in FIG. 5 represent the sequence of operations.

At operation 402, a user (e.g., network administrator, automated process, etc.) can configure a port on an LC device. Referring to the example in FIG. 5 for instance:
At time 1, interface et42 is defined at port 118c and configured with an IP address 20.0.0.1 having a /24 prefix. The /24 prefix represents the network address portion of an IP address which identifies the network that is connected to interface et42. This network is commonly referred to as a "connected route," and in this example, the connected route can be expressed by the prefix 20.0.0.0/24. For discussion purposes, IPv4 addresses will be used, but it will be understood that embodiments can include IPv6 addresses.
By comparison, a "host route" specifically targets a single IP address (a host) on a network, using a /32 prefix to identify that exact host.

At operation 404, the LC device can advertise the connected route. Referring to the example in FIG. 5 for instance:
At time 2, LC2 transmits a route advertisement 510 to all the other LC devices 116 via fabric 112. The route advertisement 510 comprises the connected route 20.0.0.0/24 and an identifier CPU-LC2 that identifies the port on CPU 202-2 in LC2.

At operation 406, the LC devices that receive the route advertisement can program their respective FIBs. Referring to the example in FIG. 5 for instance:
- At time 3, the route advertisement 510 is received by LC devices 116, including LC1.
- At time 4, each LC device 116 that receives route advertisement 510 programs an entry in its FIB using the connected route as the prefix and CPU-LC2 as the port. The example in FIG. 5 shows that LC1 programs an entry in its FIB 212-1 with the connected route 20.0.0.0/24 as the prefix and CPU-LC2 (the identifier of the port on CPU 202-2 in LC2) as the interface. Accordingly, when LC1 receives a packet whose DIP address matches on the connected route, namely the prefix 20.0.0.0/24, LC1 will send the packet to the CPU port of CPU 202-2 in LC2.

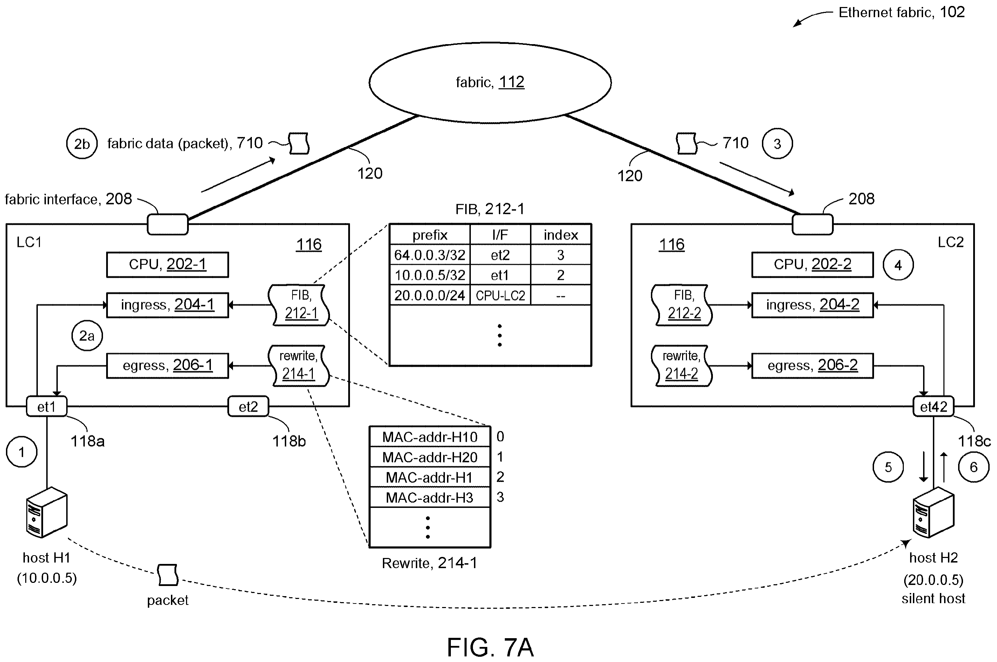

The discussion will now turn to silent hosts. A silent host is "silent" in that the host generally will not send packets to the LC device when it is first connected to the LC device; e.g., FIG. 7A shows a silent host (e.g., H2) is connected to LC2. Such devices typically consume traffic from the network but do not send traffic into the network. Traffic monitoring devices, for example, can be silent hosts if they are configured to only receive traffic from the network. As a consequence, ARP learning will not be triggered in the LC device when the silent host is connected. The LC device will not learn the MAC address of the host, and likewise none of the other LC devices in the Ethernet fabric will be aware of the presence of the silent host. Accordingly, packets with a DIP address of the silent host will be dropped.

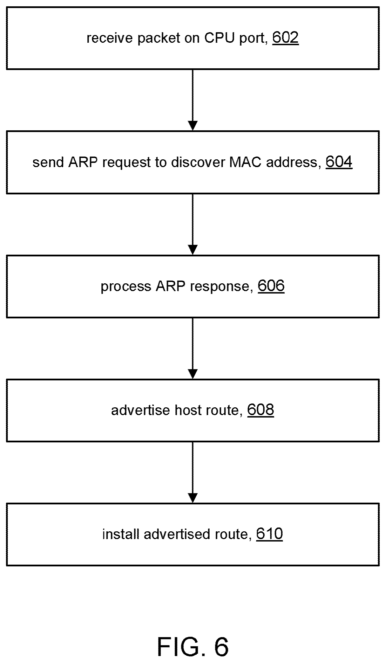

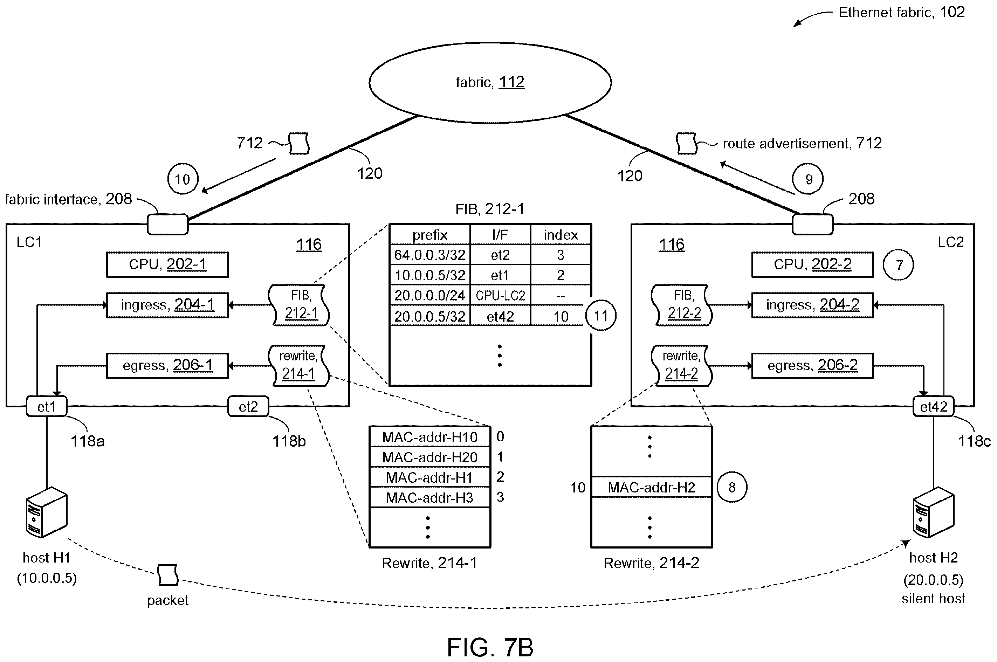

Referring to FIGs. 6, 7A, and 7B, the discussion will now turn to a high level description of processing in an Ethernet fabric (e.g., 102) in accordance with the present disclosure when a silent host is connected to an LC device (e.g., LC2) in the Ethernet fabric. FIG. 6 shows an example flow of operations in accordance with some embodiments.

FIGs. 7A and 7B illustrate the operations shown in FIG. 6 with an example. The initial set up in the example is as follows. Port 118c on LC2 is first configured as interface et42, after which host H2 is connected to interface et42. H2 is a silent host, and host H1 (connected to LC1) sends traffic to H2. As explained above, because H2 is a silent host, LC2 does not learn H2's MAC address when H2 is connected to interface et42 on LC2. FIB 212-1 in LC1 contains only an entry to the connected route of et42, namely 20.0.0.0/24, when et42 was first configured (see FIG. 5). FIB 212-1, does not contain an entry for the host route to H2 by virtue of H2 being a silent host and its MAC address has not yet been learned.

At operation 602, the LC device to which the silent host is connected (e.g., LC2) can receive a packet on the LC device's CPU port. Referring to the example in FIG. 7A for instance:
- At time 1, packets received from a host connected to an interface on an LC device are enqueued on the ingress pipeline associated with that interface. For example, packets received on interface et1 of LC1 (referred to as the "ingress" LC device) from host H1 will be enqueued on and initially processed by ingress pipeline 204-1. Suppose, for example, the destination is host H2 on interface et42 of LC2 (DIP is 20.0.0.5).
   In ingress pipeline 204-1, the DIP address in the received packet will match on the entry in FIB 212-1 that contains prefix 20.0.0.0/24. The matched FIB entry specifies the interface CPU-LC2, which is the CPU port of CPU 202-2 in LC2.
- At time 2a, 2b, because the destination is connected to LC2 (referred to as the "egress" LC device), ingress pipeline 204-1 sends the packet to the CPU port of CPU 202-2 in LC2 by enqueueing the packet on egress pipeline 206-1. Egress pipeline 206-1 then sends the packet to LC2 via fabric 112.
- At time 3, fabric 112 sends packet 710 to LC2 where it will be enqueued on the CPU port of CPU 202-2.

At operation 604, the LC device (more particularly, the CPU on the LC device) can initiate an ARP learning session; e.g., by sending an ARP request. Referring to the example in FIG. 7A for instance:
- At time 4, CPU 202-2 in LC2 determines that DIP 20.0.0.5 in the received packet has not been ARP-learned; i.e., the MAC address that corresponds to IP address 20.0.0.5 is unknown. Because interface et42 is the network that contains the IP address 20.0.0.5, the CPU can initiate an ARP session on interface et42.
- At time 5, the CPU broadcasts an ARP request on interface et42 (e.g., via egress pipeline 206-2) where H2 will receive the ARP request.
- At time 6, H2 sends an ARP response to LC2 containing the MAC address of H2 which, for example, can be received on ingress pipeline 204-2.

At operation 606, the LC device can process the ARP response. Referring to the example in FIG. 7B for instance:
- At time 7, ingress pipeline 204-2 sends the ARP response to CPU 202-2.
- At time 8, CPU 202-2 programs the MAC address of H2 into rewrite table 214-2. For example, the MAC address may be written in rewrite entry 10 as shown in the figure. At this point, the MAC address becomes known to LC2.

At operation 608, the LC device can advertise the host route. Referring to the example in FIG. 7B for instance:
- At time 9, CPU 202-2 transmits route advertisement 712 to all the other LC devices 116 via fabric 112, including LC1. The route advertisement 712 comprises the host route 20.0.0.5/32, an identifier et42 that identifies the interface that the host route is connected to, and a rewrite index '10' (the entry in the rewrite table that contains the MAC address of H2).

At operation 610, each LC device (including LC1) that receives the route advertisement can program the advertised route program in their respective FIBs. Referring to the example in FIG. 7B for instance:
- At time 10, LC1 receives the route advertisement 712.
- At time 11, CPU 202-1 in LC1 programs an entry in FIB 212-1, namely:
   prefix = 20.0.0.5/32, I/F = et42, rewrite index = 10.
At this point, the FIB 212-1 in LC1 is programmed with the host route for H2. When LC1 receives a subsequent packet destined for H2 (DIP address is 20.0.0.5), FIB 212-2 will match on the host route 20.0.0.0/32 (longest prefix match), yielding interface et42 and rewrite index 10. LC1 will send the packet paired with rewrite index 10 to the egress pipeline in LC2 (206-2) that is associated with interface et42. The packet will be enqueued on egress pipeline 206-2 of LC2, where it can be processed for egress in accordance with known forwarding operations, including rewriting the Ethernet header in the packet to replace the destination MAC address in the header with the MAC address contained in the rewrite entry at index 10, namely the MAC address of host H2.

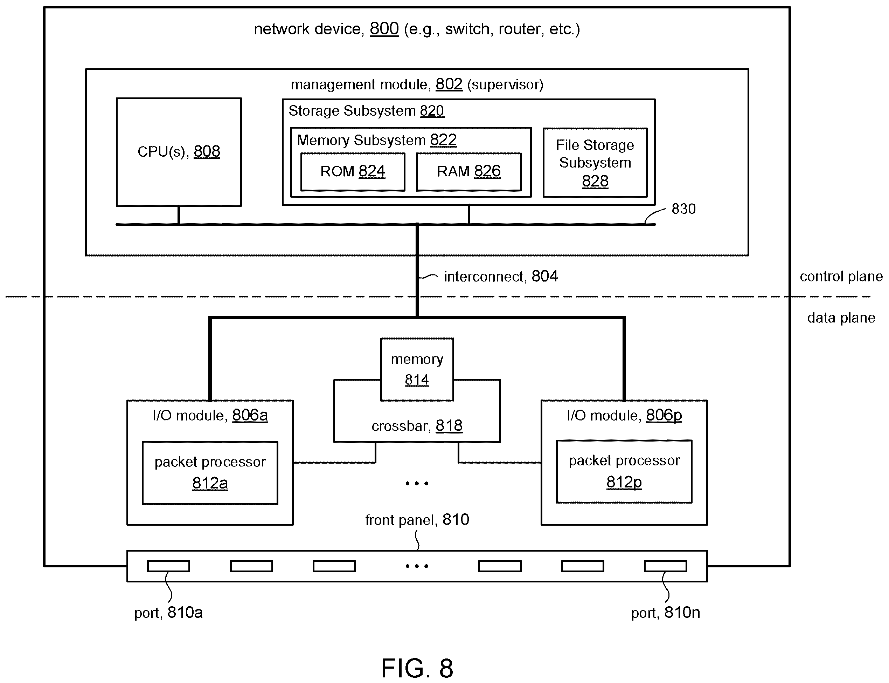

FIG. 8 is a schematic representation of a network device 800 (e.g., a router, switch, firewall, and the like) that can be adapted in accordance with the present disclosure. In some embodiments, for example, network device 800 can include one or more management modules 802, one or more I/O modules (switches, switch chips) 806a - 806p, and a front panel 810 of I/O ports (physical interfaces, I/Fs) 810a - 810n. Management module 802 can constitute the control plane of network device 800 (also referred to as the control layer or simply the central processing unit, CPU), and can include CPU(s) 808 for managing and controlling operation of network device 800 in accordance with the present disclosure. CPU(s) 808 can be a general-purpose processor, such as an Intel^{®}/AMD^{®} x86, ARM^{®} microprocessor and the like, that operates under the control of software stored in a memory device/chips such as read-only memory (ROM) 824 or random-access memory (RAM) 826. The control plane provides services that include traffic management functions such as routing, security, load balancing, analysis, and the like.

CPU(s) 808 can communicate with storage subsystem 820 via bus subsystem 830. Other subsystems, such as a network interface subsystem (not shown in FIG. 8), may be on bus subsystem 830. Storage subsystem 820 can include memory subsystem 822 and file/disk storage subsystem 828. Memory subsystem 822 and file/disk storage subsystem 828 represent examples of non-transitory computer-readable storage devices that can store program code and/or data, which when executed by CPU(s) 808, can cause CPU(s) 808 to perform operations in accordance with embodiments of the present disclosure.

Memory subsystem 822 can include a number of memories such as main RAM 826 (e.g., static RAM, dynamic RAM, etc.) for storage of instructions and data during program execution, and ROM (read-only memory) 824 on which fixed instructions and data can be stored. File storage subsystem 828 can provide persistent (i.e., non-volatile) storage for program and data files, and can include storage technologies such as solid-state drive and/or other types of storage media known in the art.

CPU(s) 808 can run a network operating system stored in storage subsystem 820. A network operating system is a specialized operating system for network device 800. For example, the network operating system can be the Arista EOS^{®} operating system, which is a fully programmable and highly modular, Linux-based network operating system developed and sold/licensed by Arista Networks, Inc. of Santa Clara, California. It is understood that other network operating systems may be used.

Bus subsystem 830 can provide a mechanism for the various components and subsystems of management module 802 to communicate with each other as intended. Although bus subsystem 830 is shown schematically as a single bus, alternative embodiments of the bus subsystem can utilize multiple buses.

The one or more I/O modules 806a - 806p can be collectively referred to as the data plane of network device 800 (also referred to as the data layer, forwarding plane, etc.). Interconnect 804 represents interconnections between modules in the control plane and modules in the data plane. Interconnect 804 can be any suitable bus architecture such as Peripheral Component Interconnect Express (PCIe), System Management Bus (SMBus), Inter-Integrated Circuit (I2C), etc.

I/O modules 806a - 806p can include respective packet processing hardware comprising packet processors 812a - 812p (collectively 812) to provide packet processing and forwarding capability. Each I/O module 806a - 806p can be further configured to communicate over one or more ports 810a - 810n on the front panel 810 to receive and forward network traffic. Packet processors 812 can comprise hardware (circuitry), including for example, data processing hardware such as an application specific integrated circuit (ASIC), field programmable gate array (FPGA), processing unit, and the like, which can be configured to operate in accordance with the present disclosure. Packet processors 812 can include forwarding lookup hardware such as, for example, but not limited to content addressable memory such as ternary CAMs (TCAMs) and auxiliary memory such as static RAM (SRAM).

Memory hardware 814 can include buffers used for queueing packets. I/O modules 806a - 806p can access memory hardware 814 via crossbar 818. It is noted that in other embodiments, the memory hardware 814 can be incorporated into each I/O module. The forwarding hardware in conjunction with the lookup hardware can provide wire speed decisions on how to process ingress packets and outgoing packets for egress. In accordance with some embodiments, some aspects of the present disclosure can be performed wholly within the data plane.

### Further Examples

Features described above as well as those claimed below may be combined in various ways without departing from the scope hereof. The following examples illustrate some possible, non-limiting combinations:
(A1) A method in an Ethernet fabric comprising a plurality of network devices including a first network device and a second network device, the method comprising the second network device: receiving on a port of a CPU (central processing unit) of the second network device a packet from the first network device destined for a host connected to the second network device; in response to the CPU receiving the packet, initiating an ARP (Address Resolution Protocol) session in the second network device to discover a MAC (media access control) address associated with a DIP (destination Internet protocol) address contained in the packet, wherein the DIP address is an IP address of the host; storing the discovered MAC address in an entry of a rewrite table of the second network device; and advertising routing information to one or more of the plurality of network devices, the routing information comprising a host route that specifies a full IP address of the host, an identifier of an egress pipeline associated with a physical port on the second network device to which the host is connected, and an index of the entry in the rewrite table where the discovered MAC address is stored; and subsequent to advertising the routing information, receiving subsequent packets from the first network device, destined for the host, on the egress pipeline and not on the CPU port, wherein the packets are processed in the egress pipeline.
(A2) For the method denoted as (A1), wherein the MAC address of the host is unknown at the time of receiving the packet from the first network device, wherein the MAC address of the host is known at the time of receiving the subsequent packets from the first network device.
(A3) For the method denoted as any of (A1) through (A2), the host is a silent host.
(A4) The method denoted as any of (A1) through (A3) further comprising, prior to receiving the packet from the first network device: configuring the physical port on the second network device with a connected route that represents a network portion of the IP address of the host; and advertising initial routing information to the plurality of network devices, the initial routing information comprising the connected route and an identifier of the CPU port of the second network device, wherein the packet from the first network device is received on the CPU port of the second network device by virtue of the first network device receiving and using the initial routing information.
(A5) For the method denoted as any of (A1) through (A4), the IP address is an IPv4 address and the connected route is a /n prefix, where 'n' is less than 32.
(A6) For the method denoted as any of (A1) through (A5), the IP address is an IPv6 address and the connected route is a /n prefix, where 'n' is less than 128.
(A7) For the method denoted as any of (A1) through (A6), a network device among the plurality of network devices that receives the routing information associates the host route with the identifier of the egress pipeline associated with the physical port on the second network device to which the host is connected.
(A8) For the method denoted as any of (A1) through (A7), the Ethernet fabric further comprises a plurality of spine devices that interconnect the plurality of network devices, wherein the packet is sent by the first network device to at least one spine device, wherein the at least one spine device sends the packet to the CPU port of the second network device.
(B 1) A network device among a plurality of network devices, the network device comprising: one or more computer processors; and a computer-readable storage device comprising instructions for controlling the one or more computer processors to: receive, on a CPU port of one of the computer processors, an initial packet from another network device in the plurality of network devices that is destined for a host connected to the network device; in response to one of the computer processors receiving the packet, initiate an ARP session to discover a MAC address associated with a DIP address contained in the packet, wherein the DIP address is an IP address of the host; advertise routing information to one or more of the plurality of network devices, the routing information comprising a host route that specifies a full IP address of the host and an identifier of an egress pipeline associated with a physical port of the network device to which the host is connected; and subsequent to advertising the routing information, receive subsequent packets from other network devices, destined for the host, on the egress pipeline and not on the CPU port, wherein the packets are processed in the egress pipeline.
(B2) For the network device denoted as (B1), the MAC address of the host is unknown at the time of receiving the initial packet, wherein the MAC address of the host is known at the time of receiving the subsequent packets.
(B3) For the network device denoted as any of (B1) through (B2), the host is a silent host.
(B4) For the network device denoted as any of (B1) through (B3), the computer-readable storage device further comprises instructions for controlling the one or more computer processors to configure, prior to receiving the initial packet, the physical port of the network device with a connected route that represents a network portion of the IP address of the host, including: advertising initial routing information to the plurality of network devices, the initial routing information comprising the connected route and an identifier of the CPU port, wherein the initial packet from the other network device is received on the CPU by virtue of the other network device receiving and using the initial routing information.
(B5) For the network device denoted as any of (B1) through (B4), the IP address is an IPv4 address and the connected route is a /n prefix, where 'n' is less than 32.
(B6) For the network device denoted as any of (B1) through (B5), the IP address is an IPv6 address and the connected route is a /n prefix, where 'n' is less than 128.
(C1) A non-transitory computer-readable storage device in a network device, the non-transitory computer-readable storage device having stored thereon computer executable instructions, which when executed, cause the network device to: receive, on a CPU port of one of the computer processors, an initial packet from another network device in the plurality of network devices that is destined for a host connected to the network device; in response to one of the computer processors receiving the packet, initiate an ARP session to discover a MAC address associated with a DIP address contained in the packet, wherein the DIP address is an IP address of the host; advertise routing information to one or more of the plurality of network devices, the routing information comprising a host route that specifies a full IP address of the host and an identifier of an egress pipeline associated with a physical port of the network device to which the host is connected; and subsequent to advertising the routing information, receive subsequent packets from other network devices, destined for the host, on the egress pipeline and not on the CPU port, wherein the packets are processed in the egress pipeline.
(C2) For the non-transitory computer-readable storage device denoted as (C1), the MAC address of the host is unknown at the time of receiving the initial packet, wherein the MAC address of the host is known at the time of receiving the subsequent packets.
(C3) For the non-transitory computer-readable storage device denoted as any of (C1) through (C2), the host is a silent host.
(C4) For the non-transitory computer-readable storage device denoted as any of (C1) through (C3), the computer executable instructions, which when executed, further cause the network device to configure, prior to receiving the initial packet, the physical port of the network device with a connected route that represents a network portion of the IP address of the host, including: advertising initial routing information to the plurality of network devices, the initial routing information comprising the connected route and an identifier of the CPU port, wherein the initial packet from the other network device is received on the CPU port by virtue of the other network device receiving and using the initial routing information.
(C5) For the non-transitory computer-readable storage device denoted as any of (C1) through (C4), the IP address is an IPv4 address and the connected route is a /n prefix, where 'n' is less than 32.
(C6) For the non-transitory computer-readable storage device denoted as any of (C1) through (C5), the IP address is an IPv6 address and the connected route is a /n prefix, where 'n' is less than 128.

The above description illustrates various embodiments of the present disclosure along with examples of how aspects of the present disclosure may be implemented. The above examples and embodiments should not be deemed to be the only embodiments, and are presented to illustrate the flexibility and advantages of the present disclosure as defined by the following claims. Based on the above disclosure and the following claims, other arrangements, embodiments, implementations and equivalents may be employed without departing from the scope of the disclosure as defined by the claims.

## Claims

1. A method in an Ethernet fabric comprising a plurality of network devices including a first network device and a second network device, the method comprising the second network device:
receiving on a port of a CPU (central processing unit) of the second network device a packet from the first network device destined for a host connected to the second network device;
in response to the CPU receiving the packet, initiating an ARP (Address Resolution Protocol) session in the second network device to discover a MAC (media access control) address associated with a DIP (destination Internet protocol) address contained in the packet, wherein the DIP address is an IP address of the host;
storing the discovered MAC address in an entry of a rewrite table of the second network device; and
advertising routing information to one or more of the plurality of network devices, the routing information comprising a host route that specifies a full IP address of the host, an identifier of an egress pipeline associated with a physical port on the second network device to which the host is connected, and an index of the entry in the rewrite table where the discovered MAC address is stored; and
subsequent to advertising the routing information, receiving subsequent packets from the first network device, destined for the host, on the egress pipeline and not on the CPU port, wherein the packets are processed in the egress pipeline.

2. The method as in claim 1, wherein the MAC address of the host is unknown at the time of receiving the packet from the first network device, wherein the MAC address of the host is known at the time of receiving the subsequent packets from the first network device.

3. The method as in any one of the preceding claims, wherein the host is a silent host.

4. The method as in any one of the preceding claims, further comprising prior to receiving the packet from the first network device:
configuring the physical port on the second network device with a connected route that represents a network portion of the IP address of the host; and
advertising initial routing information to the plurality of network devices, the initial routing information comprising the connected route and an identifier of the CPU port of the second network device,
wherein the packet from the first network device is received on the CPU port of the second network device by virtue of the first network device receiving and using the initial routing information.

5. The method as in any one of the preceding claims, wherein the IP address is an IPv4 address and the connected route is a /n prefix, where 'n' is less than 32.

6. The method as in any one of claim 1 to claim 4, wherein the IP address is an IPv6 address and the connected route is a /n prefix, where 'n' is less than 128.

7. The method as in any one of the preceding claims, wherein a network device among the plurality of network devices that receives the routing information associates the host route with the identifier of the egress pipeline associated with the physical port on the second network device to which the host is connected.

8. The method as in any one of the preceding claims, wherein the Ethernet fabric further comprises a plurality of spine devices that interconnect the plurality of network devices, wherein the packet is sent by the first network device to at least one spine device, wherein the at least one spine device sends the packet to the CPU port of the second network device.

9. A network device among a plurality of network devices, the network device comprising:
one or more computer processors; and
a computer-readable storage device comprising instructions for controlling the one or more computer processors to:
receive, on a CPU port of one of the computer processors, an initial packet from another network device in the plurality of network devices that is destined for a host connected to the network device;
in response to one of the computer processors receiving the packet, initiate an ARP session to discover a MAC address associated with a DIP address contained in the packet, wherein the DIP address is an IP address of the host;
advertise routing information to one or more of the plurality of network devices, the routing information comprising a host route that specifies a full IP address of the host and an identifier of an egress pipeline associated with a physical port of the network device to which the host is connected; and
subsequent to advertising the routing information, receive subsequent packets from other network devices, destined for the host, on the egress pipeline and not on the CPU port, wherein the packets are processed in the egress pipeline.

10. The network device as in claim 9, wherein the MAC address of the host is unknown at the time of receiving the initial packet, wherein the MAC address of the host is known at the time of receiving the subsequent packets.

11. The network device as in claim 9 or claim 10, wherein the host is a silent host.

12. The network device as in any one of claim 9 to claim 11, wherein the computer-readable storage device further comprises instructions for controlling the one or more computer processors to configure, prior to receiving the initial packet, the physical port of the network device with a connected route that represents a network portion of the IP address of the host, including:
advertising initial routing information to the plurality of network devices, the initial routing information comprising the connected route and an identifier of the CPU port,
wherein the initial packet from the other network device is received on the CPU by virtue of the other network device receiving and using the initial routing information.

13. The network device as in any one of claim 9 to claim 12, wherein the IP address is an IPv4 address and the connected route is a /n prefix, where 'n' is less than 32.

14. The network device as in any one of claim 9 to claim 12, wherein the IP address is an IPv6 address and the connected route is a /n prefix, where 'n' is less than 128.

15. A non-transitory computer-readable storage device in a network device, the non-transitory computer-readable storage device having stored thereon computer executable instructions, which when executed, cause the network device to:
receive, on a CPU port of one of the computer processors, an initial packet from another network device in the plurality of network devices that is destined for a host connected to the network device;
in response to one of the computer processors receiving the packet, initiate an ARP session to discover a MAC address associated with a DIP address contained in the packet, wherein the DIP address is an IP address of the host;
advertise routing information to one or more of the plurality of network devices, the routing information comprising a host route that specifies a full IP address of the host and an identifier of an egress pipeline associated with a physical port of the network device to which the host is connected; and
subsequent to advertising the routing information, receive subsequent packets from other network devices, destined for the host, on the egress pipeline and not on the CPU port, wherein the packets are processed in the egress pipeline.
